# EUROPEAN PATENT APPLICATION

(11) **EP 4 604 245 A1**
(43) Date of publication of application: **20.08.2025**
(21) Application number: 23877474.9
(22) Date of filing: 28.08.2023
(51) Int. Cl.: H01M 10/0562, H01M 10/052, C01G 25/00

(54) **HALIDE SOLID ELECTROLYTE, METHOD FOR PREPARING SAME, AND SECONDARY BATTERY INCLUDING SAME**

(30) Priority: 11.10.2022 KR 20220130017
(71) Applicant: LOTTE ENERGY MATERIALS CORPORATION, Iksan-si, Jeollabuk-do 54586 (KR); Seoul National University R&DB Foundation, Seoul 08826 (KR)
(72) Inventor: NOH, Joohyeon, Seoul 08826 (KR); KANG, Kisuk, Seoul 06327 (KR); RYU, Jong Ho, Sejong 30127 (KR); PARK, Joonwoo, Yongin-si, Gyeonggi-do 16816 (KR); LEE, Jeonghyun, Seoul 04924 (KR); HA, Takrae, Seoul 08740 (KR)
(74) Representative: Germain Maureau
(86) International application number: PCT/KR2023/012716
(87) International publication number: WO 2024/080544

(57) **Abstract**

The present disclosure relates to a halide solid electrolyte that exhibits a more improved ionic conductivity, excellent stability and flexibility, and the like, a method for producing the same, and a secondary battery comprising the same. The halide solid electrolyte may be represented by the Formula: Li_{(6-4a+b)}MₐX_{6-b}S_{b}.

## Description

### [TECHNICAL FIELD]

### Cross Citation with Related Application(s)

This application claims the benefit of Korean Patent Application No. 10-2022-0130017 filed on October 11, 2022 in the Korean Intellectual Property Office, the disclosure of which is incorporated herein by reference in its entirety.

The present disclosure relates to a halide solid electrolyte that exhibits a more improved ionic conductivity, excellent stability and flexibility, and the like, a method for producing the same, and a secondary battery comprising the same.

### [BACKGROUND]

Industrial fields requiring lithium secondary batteries have been recently expanding from a power supply for small mobile device to a medium- and large-sized electric vehicle and energy storage system (ESS).

In particular, interest in electric vehicles has been growing rapidly, and major automobile companies around the world recognize electric vehicles as the next-generation growth technology and are accelerating technology development. In the case of medium- and large-sized lithium secondary batteries applied for this purpose, not only the operating environments are harsh unlike the small-sized batteries, but also safety must be ensured because they include large-capacity batteries. Accordingly, interest in safety issues of lithium secondary batteries is greatly increasing.

Conventional lithium secondary batteries contain a liquid electrolyte containing non-aqueous solvents, and therefore have problems such as low thermal stability, ignition, and leakage. Actually, explosion accidents involving products to which this has been applied are continuously being reported, and thus, there is an urgent need to resolve these problems.

For this reason, interest and research into semi-solid or all-solid batteries that substitutes part or all of the liquid electrolyte with a solid electrolyte is continuously increasing. By the way, the solid electrolyte requires excellent interfacial properties between the electrolyte layer containing it and the active material layer, and further excellent contact properties between the solid electrolyte and the active material particles. In addition, excellent lithium ion conductivity comparable to that of a liquid electrolyte is required.

A study on various solid electrolytes to meet these requirements has been ongoing from before. For example, sulfide-based solid electrolytes, oxide-based solid electrolytes, or halide-based solid electrolytes have been proposed.

Among them, sulfide-based solid electrolytes have the advantage in that it is more flexible than oxide-based solid electrolytes, easily induces close contact between the solid electrolyte and the active material particles, and has relatively excellent lithium ion conductivity, but have the disadvantage in that it has low stability when exposed to moisture and oxygen in the air, making the battery production process difficult. In addition, the oxide-based solid electrolytes have disadvantages in that it is difficult to ensure excellent contact properties between the solid electrolyte and the active material, and ionic conductivity is insufficient.

In recent years, in order to solve the drawbacks of the sulfide-based or oxide-based solid electrolyte, a halide solid electrolyte that exhibits excellent stability and a certain level of ionic conductivity has been proposed. However, the previously proposed halide solid electrolyte also does not exhibit sufficient lithium ion conductivity, and thus, there is a need to further complement these points.

### [DETAILED DESCRIPTION OF THE INVENTION]

### [Technical Problem]

It is an object of the present disclosure to provide a halide solid electrolyte that exhibits a more improved ionic conductivity, excellent stability and flexibility, and the like, and a method for producing the same.

It is another object of the present disclosure to provide a secondary battery comprising the halide solid electrolyte and thus exhibiting excellent safety and capacity characteristics.

### [Technical Solution]

According to one aspect of the present disclosure, there is provided a halide solid electrolyte represented by the following Formula 1:

[Formula 1] Li_{(6-4a+b)}MₐX_{6-b}S_{b}

wherein in Formula 1, M is a tetravalent transition metal element, X is a halogen element, 0 < a < 1.5, and 0 < b < 6.

According to another aspect of the present disclosure, there is provided a method for producing the halide solid electrolyte of Formula 1, comprising reacting a mixture of lithium halide, a group 4 transition metal M halide, and lithium sulfide under the application of mechanical force.

According to yet another aspect of the present disclosure, there is provided a secondary battery comprising:
a cathode;
an anode; and
an electrolyte layer formed between the cathode and the anode,
wherein at least one of the cathode, the anode, or the electrolyte layer comprises the halide solid electrolyte of Formula 1.

### [Advantageous Effects]

The solid electrolyte of the present disclosure is a solid electrolyte in the form of a lithium transition metal halide in which a part of the halogen element is substituted and doped with sulfur. Such a solid electrolyte of the present disclosure can further increase the content ratio of lithium in the structure since a part of the halogen element is substituted and doped with sulfur, which is -2 valent element. Therefore, it has been confirmed that such a solid electrolyte can exhibit improved lithium ion conductivity as compared to conventionally known halide solid electrolytes.

In addition, the solid electrolyte can control the substitution ratio of sulfur, etc. to thereby maintain excellent crystallographic and structural stability of the basic halide solid electrolyte, and thus, can exhibit excellent stability even when exposed to air, oxygen or the like. Further, the solid electrolyte exhibits excellent flexibility due to the substitution of sulfur, which makes it easy to secure excellent contact properties between the solid electrolyte and the active material particles.

Therefore, the solid electrolyte of the present disclosure can greatly contribute to replacing the existing liquid electrolyte and providing a secondary battery with excellent safety and high energy density.

### [BRIEF DESCRIPTION OF THE DRAWINGS]

FIG. 1 is a schematic diagram of a secondary battery 100 to which a halide solid electrolyte according to an embodiment of the disclosure is applied;
FIG. 2 is an X-ray diffraction analysis (XRD) spectrum of the halide solid electrolyte of Example 2 (Li_{2.1}ZrCl_{5.9}S_{0.1}), Example 4(Li_{2.2}ZrCl_{5.8}S_{0.2}), Example 6(Li_{2.3}ZrCl_{5.7}S_{0.3}) and Example 7(Li_{2.4}ZrCl_{5.6}S_{0.4}).
FIG. 3a is a voltage-capacity graph of the initial charge/discharge cycle of the secondary batteries produced using the solid electrolytes of Comparative Example 1 (Li₂ZrCl₆) and Example 2 (Li_{2.1}ZrCl_{5.9}S_{0.1}), respectively, and FIG. 3b is a graph showing the discharge capacity per cycle of such a secondary battery; and
FIG. 4a is an X-ray diffraction analysis (XRD) spectrum of the solid electrolyte of Comparative Example 1 (Li₂ZrCl₆), Example 2(Li_{2.1}ZrCl_{5.9}S_{0.1}) and Example 4(Li_{2.2}ZrCl_{5.8}S_{0.2}) after being stored in an oxygen atmosphere for 3 weeks, and FIG. 4b is an X-ray diffraction analysis (XRD) spectrum of the solid electrolytes of Comparative Example 1 (Li₂ZrCl₆) and Example 2(Li_{2.1}ZrCl_{5.9}S_{0.1}) after being stored in air for 1 day.

### [DETAILED DESCRIPTION OF THE EMBODIMENTS]

Now, a halide solid electrolyte, a method for producing the same, and a secondary battery comprising the same according to specific embodiments of the disclosure will be described in detail.

According to one embodiment of the present disclosure, there is provided a halide solid electrolyte represented by the following Formula 1:

[Formula 1] Li_{(6-4a+b)}MₐX_{6-b}S_{b}

wherein in Formula 1, M is a tetravalent transition metal element, X is a halogen element, 0 < a < 1.5, and 0 < b < 6.

The present inventors continued their research to develop a halide solid electrolyte that not only exhibits a more improved ionic conductivity as compared to previously known solid electrolytes while exhibiting excellent structural and chemical stability even when exposed to moisture, oxygen or the like in the air, but also exhibits excellent flexibility and thus can achieve excellent contact properties between the solid electrolyte and the active material particles, and further excellent interfacial properties between the solid electrolyte layer and the active material layer.

In the course of such research, the present inventors had found that the halide solid electrolyte of Formula 1, which is based on a lithium transition metal halide to which a Group 4 transition metal is bonded and in which a part of the halogen element in the halide is substituted and doped with sulfur, can meet the requirements of the industry, and completed the present disclosure.

The halide solid electrolyte of Formula 1 may have a higher content ratio of lithium in its structure since a part of the halogen element that forms a monovalent anion is substituted with a sulfur element that forms a divalent anion, which allows more lithium ions to be formed in the electrolyte. Therefore, the solid electrolyte of the one embodiment can exhibit improved ionic conductivity as compared to previously known halide solid electrolytes, and the like.

Further, the solid electrolyte of the one embodiment substitutes a part of the halogen elements with sulfur having an element size similar to that of chlorine (CI), which is a typical halogen element, while it adjusts the substitution ratio of sulfur, and the like. As a result, it has been confirmed that the solid electrolyte can maintain excellent structural stability of the basic halide, and can exhibit excellent stability even when used in a high voltage environment or exposed to moisture, oxygen or the like in the air.

In addition, the solid electrolyte exhibits excellent flexibility similar to existing sulfide-based solid electrolytes due to the substitution of sulfur, which makes it possible to easily secure excellent contact properties between the solid electrolyte and the active material particles, and further excellent interfacial properties between the electrolyte layer and the active material layer.

Therefore, the solid electrolyte of the one embodiment can contribute to replacing existing liquid electrolytes and thus providing lithium secondary batteries and the like with excellent safety and high energy density.

On the other hand, in the solid electrolyte of the one embodiment, M in Formula 1 may be a transition metal element having a tetravalent oxidation state, for example, a transition metal element belonging to group 4 of the periodic table, and specifically, it may be one or more tetravalent transition metal elements selected from the group consisting of zirconium (Zr), hafnium (Hf), and titanium (Ti). Among these, M may be zirconium (Zr) so that the solid electrolyte can form a stable crystal structure.

In a more specific example, from the viewpoint of excellent stability and ionic conductivity of the solid electrolyte, M may include 60 mol % or more, 80 mol % or more, or 80 to 100 mol % of zirconium (Zr), and can include the remaining amount of hafnium (Hf) or titanium (Ti), based on the total content of 100 mol% of the transition metal M contained in the solid electrolyte.

Further, X in Formula 1 may be any halogen element, for example, one or more halogen elements selected from the group consisting of fluorine (F), chlorine (CI), bromine (Br), and iodine (I). Among these, in consideration of the excellent ionic conductivity of the solid electrolyte and its excellent stability when a part of the electrolyte is substituted with sulfur, X may be chlorine (Cl).

In a more specific example, considering the excellent ionic conductivity of the solid electrolyte, and the like, X may include 60 mol% or more, or 80 mol% or more, or 80 to 100 mol% of the chloride (CI), and can include a remaining bromine (Br), iodine (I) or fluorine (F), based on the total content of 100 mol% of the halogen element X contained in the solid electrolyte,

In a more specific example, considering the excellent ionic conductivity and structural stability of the solid electrolyte, the X consists only of chlorine (Cl), or may contain 60 to 99 mol%, or 80 to 90 mol% of chlorine (Cl) and 1 to 40 mol%, or 10 to 20 mol% of bromine (Br).

On the other hand, in the solid electrolyte of Formula 1, in order to further enhance the effect of improving ionic conductivity and flexibility due to the substitution of a part of sulfur while maintaining the structural and crystallographic stability of the basic lithium transition metal halide, b, which defines the degree of sulfur substitution, and a, which defines the content ratio of the tetravalent transition metal M, can be adjusted to an appropriate range.

For example, 6-4a+b, which defines the content ratio of lithium in Formula 1, may be adjusted within the range of more than 2 and 3.3 or less, or 2.05 to 2.80, or 2.10 to 2.40. By adjusting the range of 6-4a+b in this way, the content ratio of lithium can be increased, thereby maintaining excellent stability of the solid electrolyte while further improving ionic conductivity.

Moreover, considering the excellent stability or the like of the solid electrolyte along with the appropriate range of the lithium content ratio 6-4a+b, a, which corresponds to the content ratio of the tetravalent transition metal M, may satisfy the range of 0.8 to 1.0, 0.95 to 1.0, or 0.98 to 1.0. Furthermore, b, which defines the substitution and doping ratio of sulfur, may satisfy the range of more than 0 and 0.5 or less, or 0.05 to 0.4, or 0.1 to 0.25, or 0.15 to 0.25.

As the molar ratio of a and b satisfies the above range, the solid electrolyte of one embodiment can exhibit more improved ionic conductivity and flexibility, and also can exhibit excellent stability comparable to that of the basic halide. However, if the range of b is too large or the range of a is too small, and the like, the ionic conductivity or stability of the solid electrolyte may rather decrease.

The solid electrolyte of the above-mentioned one embodiment can basically have a stable trigonal or hexagonal crystal structure. Such a crystal structure can be stably maintained even under partial substitution and doping of sulfur. The solid electrolyte of one embodiment having such a stable crystal structure can exhibit excellent stability even when driven at high voltage or exposed to moisture, oxygen or the like in the air.

The shape of the halide solid electrolyte is not particularly limited, and may have, for example, acicular, spherical, or elliptic spherical particle shapes. Alternatively, such particles may be formed to have the shape of pellets or plates.

Further, when the solid electrolyte has, for example, spherical or elliptic spherical particle shapes, the solid electrolyte particles may have a D50 of 0.1 to 100 µm, or 0.5 to 10 µm. At this time, D50 may mean the particle size when the cumulative volume of the volume-based particle size distribution corresponds to 50%, and the corresponding volume-based particle size distribution and D50 can be measured using a laser particle size analyzer or the like.

As the particle size of the solid electrolyte particles satisfies the above range, the dispersibility of the solid electrolyte can be improved, and excellent contact properties with active material particles, or the like can be achieved.

The solid electrolyte of one embodiment described above can be produced by a method comprising reacting a mixture of lithium halide, a group 4 transition metal M halide, and lithium sulfide, for example, under the application of mechanical force.

More specifically, lithium halide LiX corresponding to each raw material, halide MX₄ of group 4 transition metal M, and lithium sulfide Li₂S are mixed in a molar ratio of (6-4a-b):a:b according to the equivalent ratio, and such a mixture can be reacted under the application of mechanical force to produce the solid electrolyte of Formula 1.

At this time, each raw material can be mixed in a solid phase in a powder state, and such solid-phase mixing and reaction steps can proceed with mechanical milling using any one of ball mill, vibration mill, turbo mill, mechanofusion mill, disk mill, or the like.

At this time, the mechanical milling can be performed at a rotation speed of 300 to 700 rpm, or 400 to 600 rpm, and can proceed for 10 to 30 hours, or 12 to 24 hours.

By such a mechanical milling method or the like, the above-mentioned raw materials can be mixed and reacted according to the equivalence ratio to produce the halide solid electrolyte of one embodiment.

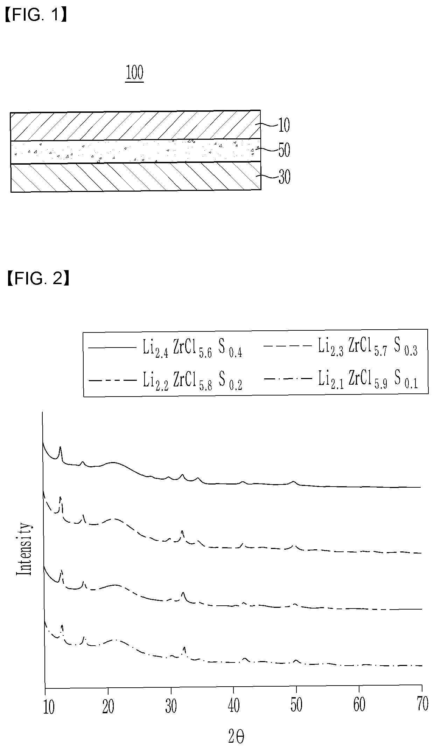

On the other hand, according to another embodiment of the present disclosure, there is provided a secondary battery 100 including the solid electrolyte of one embodiment described above. FIG. 1 shows a schematic diagram of such a secondary battery 100. The secondary battery 100 of the other embodiment includes a cathode 10; an anode 30; and an electrolyte layer 50 formed between the cathode 10 and the anode 30, wherein at least one of the cathode 10, the anode 30, and the electrolyte layer 50 includes the halide solid electrolyte of one embodiment described above.

The cathode 10 may include an active material layer containing a cathode active material, and may further include a solid electrolyte, a conductive material, and a binder in addition to the cathode active material. At this time, the cathode 10 may include a solid electrolyte, for example, a solid electrolyte of one embodiment.

At this time, the ratio of the solid electrolyte of the one embodiment included in the cathode 10 varies depending on the type of a battery, but for example, it may be included in a ratio of 0.1 to 80 volume%, 1 to 60 volume%, or 10 to 50 volume%, based on the volume of the entire active material layer.

Further, the cathode active material may be in the form of lithium metal oxide capable of electrochemically intercalating and de-intercalating lithium through an oxidation-reduction reaction. The type of such cathode active material is not particularly limited, but examples thereof may include a lithium-cobalt-based complex oxide such as LiCoO₂, a lithium-nickel-based complex oxide such as LiNiO₂, a lithium-manganese-based complex oxide such as LiMn₂O₄, a lithium-vanadium-based complex oxide such as LiV₂O₅, a lithium-iron-based complex oxide or phosphorus oxide, or a complex oxide represented by the following Formula 2 or 3:

[Formula 2] LiNixCoyMnzO2(x+y+z=1)

[Formula 3] LiNixCoyMnzMaO2 (x+y+z+a=1)

wherein M is one or more elements selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W.

In addition, as the conductive material, conductive materials other than those previously known to be usable for lithium secondary batteries or the like can be used, and for example, graphene, carbon nano-tube, Ketjen black, activated carbon, Super p carbon in the form of powder, Denka in the form of rod, and vapor grown carbon fiber (VGCF) can be appropriately used.

Further, the cathode 10 can be formed by forming an active material layer on a current collector using a composition containing the above-described cathode active material, a solid electrolyte such as the solid electrolyte of one embodiment, a conductive material, a binder, a solvent, and the like. At this time, some of the solid electrolyte, solvent, conductive material, binder, and the like may be omitted or used depending on the shape of a battery.

On the other hand, the anode 30 includes an active material layer containing an anode active material.

The anode active material may be a material capable of electrochemically intercalating or de-intercalating lithium through an oxidation-reduction reaction. For example, the anode active material may be metal lithium or a LiAl-based, LiAg-based, LiPb-based, LiSi-based, or Liln-based alloy that is alloyed with lithium. Further, as the anode active material, general carbon materials such as hardly graphitizable carbon obtained by sintering and carbonizing graphite or a resin, easily graphitizable carbon obtained by thermally treating cokes, and fullerene may be used, or silicon, an alloy thereof, or a silicon oxide may be used, or a variety of other materials may be used.

The active material layer of the anode 30 may also further include a solid electrolyte, a conductive material, and a binder in addition to the anode active material. At this time, the anode 30 may include a solid electrolyte, for example, a solid electrolyte of one embodiment.

On the other hand, the solid electrolyte that can be used in the anode 30, its content, the type of conductive material, etc., and the producing process of the anode 30 are the same as described for the cathode 10, and therefore, further explanation regarding this will be omitted.

The electrolyte layer 50 is a layer formed between the cathode 10 and the anode 30, and if necessary, it may be a solid electrolyte layer containing only a solid electrolyte, or a semi-solid electrolyte layer further containing some electrolyte in liquid or gel state. Further, depending on the battery shape, etc., the electrolyte layer 50 may have a stacked structure including a plurality of electrolyte layers each containing a solid electrolyte of mutually different compositions in some instances. In addition to the electrolyte layer 50, a separator including a porous polyolefin resin substrate or the like may be further stacked.

However, according to one example, the electrolyte layer 50 may be a solid electrolyte layer containing a halide solid electrolyte of one embodiment.

At this time, the proportion of the solid electrolyte of the one embodiment included in the electrolyte layer 50 may be contained, for example, in an amount of 10 to 100% by volume, or 50 to 100% by volume, based on the volume of the entire electrolyte layer.

The thickness of the electrolyte layer 50 may be, for example, 0.1 to 1000 µm, or 0.1 to 300 µm, and for example, it can be produced by a method of compression molding the solid electrolyte of one embodiment, or by a method of mixing the solid electrolyte with a binder, a solvent, and the like, applying a slurry, and then drying it.

The secondary battery of the other embodiments described above may be in the form of an all-solid secondary battery, a semi-solid secondary battery, or the like, depending on whether an additional liquid-state or gel-state electrolytes are included. As the secondary battery of such other embodiment includes the solid electrolyte of one embodiment, it can exhibit improved ionic conductivity, capacity characteristics, and life characteristics, while ensuring excellent safety.

Hereinafter, preferred embodiments are presented for a better understanding of the invention, but the following examples are for illustrative purposes only, and it will be obvious to those skilled in the art that various variations and modifications can be made without departing from the scope and technical spirit of the invention, and it goes without saying that such variations and modifications fall under the scope of the appended claims.

### Examples 1 to 19 and Comparative Example 1: Preparation of halide solid electrolyte

Each raw material of LiCl, LiBr, ZrCl₄ and Li₂S was charged into to a ball milling bowl at a molar ratio of (6-4a-b-x):x:a:b with reference to the composition formula shown in Table 1 below. For reference, the charging ratio of each raw material takes into account the composition formula of the following Formula 1a of the solid electrolyte to be finally produced, and can be calculated from the a, b, and x values of each Example and Comparative Example listed in Table 1 below.

Subsequently, the raw material mixture was reacted under mechanical milling for 12 hours while ball milling under the conditions of 400 to 600 rpm and 15 minutes of milling and 15 minutes of rest to prepare a solid electrolyte having the composition formula of Formula 1a as summarized in Table 1 below..

[Formula 1a] Li_{(6-4a+b)}ZrₐCl_{6-b-x}BrₓS_{b}

wherein in Formula 1a, a, b and x are as summarized in Table 1 below.

**[Table 1]**

| **Example / Comparative Example** | **Composition formula** | **6-4a+b** | **a** | **6-b** | **b** | **6-b-x** | **X** |
|---|---|---|---|---|---|---|---|
| Comparative Example 1 | Li₂ZrCl₆ | 2 | 1 | 6 | 0 | 6 | 0 |
| Example 1 | Li_{2.05}ZrCl_{5.95}S_{0.05} | 2.05 | 1 | 5.95 | 0.05 | 5.95 | 0 |
| Example 2 | Li_{2.1}ZrCl_{5.9}S_{0.1} | 2.1 | 1 | 5.9 | 0.1 | 5.9 | 0 |
| Example 3 | Li_{2.15}ZrCl_{5.85}S_{0.15} | 2.15 | 1 | 5.85 | 0.15 | 5.85 | 0 |
| Example 4 | Li_{2.2}ZrCl_{5.9}S_{0.2} | 2.2 | 1 | 5.8 | 0.2 | 5.8 | 0 |
| Example 5 | Li_{2.25}ZrCl_{5.75}S_{0.25} | 2.25 | 1 | 5.75 | 0.25 | 5.75 | 0 |
| Example 6 | Li_{2.3}ZrCl_{5.7}S_{0.3} | 2.3 | 1 | 5.7 | 0.3 | 5.7 | 0 |
| Example 7 | Li_{2.4}ZrCl_{5.6}S_{0.4} | 2.4 | 1 | 5.6 | 0.4 | 5.6 | 0 |
| Example 8 | Li_{2.2}Zr_{0.975}Cl_{5.9}S_{0.1} | 2.2 | 0.975 | 5.9 | 0.1 | 5.9 | 0 |
| Example 9 | Li_{2.25}Zr_{0.975}Cl_{5.85}S_{0.15} | 2.25 | 0.975 | 5.85 | 0.15 | 5.85 | 0 |
| Example 10 | Li_{2.3}Zr_{0.975}Cl_{5.8}S_{0.2} | 2.3 | 0.975 | 5.8 | 0.2 | 5.8 | 0 |
| Example 11 | Li_{2.35}Zr_{0.975}Cl_{5.75}S_{0.25} | 2.35 | 0.975 | 5.75 | 0.25 | 5.75 | 0 |
| Example 12 | Li_{2.25}Zr_{0.95}Cl_{5.95}S_{0.05} | 2.25 | 0.95 | 5.95 | 0.05 | 5.95 | 0 |
| Example 13 | Li_{2.3}Zr_{0.95}Cl_{5.9}S_{0.1} | 2.3 | 0.95 | 5.9 | 0.1 | 5.9 | 0 |
| Example 14 | Li_{2.35}Zr_{0.95}Cl_{5.85}S_{0.15} | 2.35 | 0.95 | 5.85 | 0.15 | 5.85 | 0 |
| Example 15 | Li_{2.4}Zr_{0.95}Cl_{5.8}S_{0.2} | 2.4 | 0.95 | 5.8 | 0.2 | 5.8 | 0 |
| Example 16 | Li_{2.2}ZrCl_{4.8}BrS_{0.2} | 2.2 | 1 | 5.8 | 0.2 | 4.8 | 1 |
| Example 17 | Li_{2.45}Zr_{0.95}Cl_{5.75}S_{0.25} | 2.45 | 0.95 | 5.75 | 0.25 | 5.75 | 0 |
| Example 18 | Li_{2.5}Zr_{0.925}Cl_{5.8}S_{0.2} | 2.5 | 0.925 | 5.8 | 0.2 | 5.8 | 0 |
| Example 19 | Li_{2.55}Zr_{0.925}Cl_{5.75}S_{0.25} | 2.55 | 0.925 | 5.75 | 0.25 | 5.75 | 0 |

### Preparation Example: Production of secondary battery

Each lithium secondary battery was produced by the following method using the halide solid electrolyte of the previous Examples or Comparative Example.

The cathode was produced by applying a dry mixing process. Specifically, single crystal LiNi_{0.8}Mn_{0.1}Co_{0.1}O₂ was used as the cathode active material, and one of the solid electrolytes of the Examples or Comparative Examples was used as the solid electrolyte. Further, carbon nanofiber (CNF) was used as a conductive material.

Cathode active material: solid electrolyte: conductive material were mixed in a ratio (parts by weight) of 80:20:3 to produce an active material layer and a cathode.

The electrolyte layer was produced by press-molding a sulfide-based solid electrolyte and then further press-molding the halide solid electrolyte selected in the Examples or Comparative Example. Li₅PS₅Cl was used as the sulfide-based solid electrolyte.

A secondary battery was produced using the Li-In alloy as an anode together with such cathode and electrolyte layer. In the electrolyte layer, the sulfide solid electrolyte was placed to be directed toward the cathode, and the halide solid electrolyte was placed so as to face the cathode.

### Test Example: Evaluation of characteristics of solid electrolyte or secondary battery

### (1) X-ray diffraction measurement and stability evaluation

First, the solid electrolytes in Examples or Comparative Examples were subjected to X-ray diffraction analysis over 2θ of 10 to 70°, whereby the crystal structure of each solid electrolyte was confirmed.

For reference, the X-ray diffraction analysis (XRD) spectrum of the solid electrolytes of Example 2(Li_{2.1}ZrCl_{5.9}S_{0.1}), Example 4(Li_{2.2}ZrCl_{5.8}S_{0.2}), Example 6(Li_{2.3}ZrCl_{5.7}S_{0.3}) and Example 7(Li_{2.4}ZrCl_{5.6}S_{0.4}) is shown in FIG. 2.

Referring to FIG. 2, it was confirmed that the solid electrolytes of Examples exhibit crystallinity, and that as the substitution and doping amount of S increases, the intensity of each peak tends to decrease.

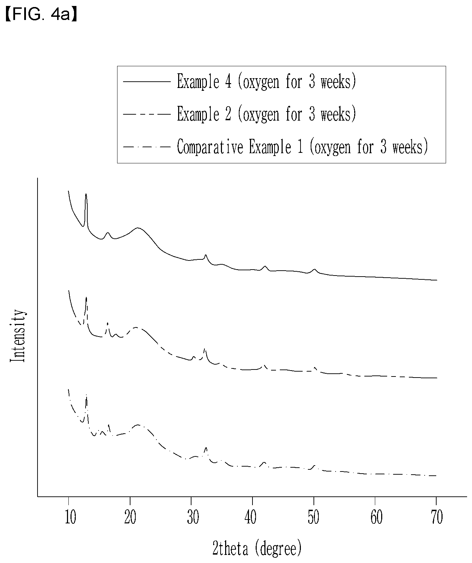

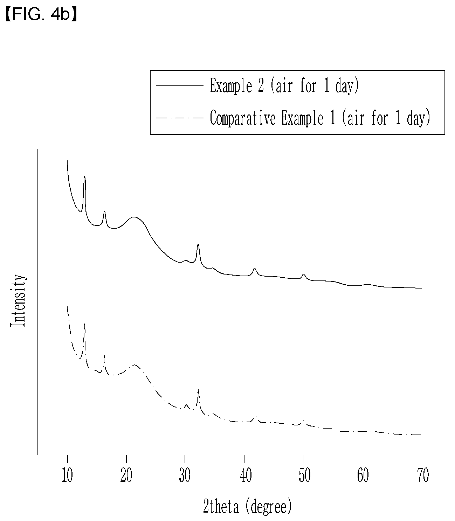

Further, in order to evaluate the stability of the solid electrolytes of the Examples and Comparative Example, the solid electrolytes of Comparative Example 1(Li₂ZrCl₆), Example 2(Li_{2.1}ZrCl_{5.9}S_{0.1}) and Example 4(Li_{2.2}ZrCl_{5.8}S_{0.2}) were stored in an oxygen atmosphere for 3 weeks, and then subjected to X-ray diffraction analysis (XRD), and their spectrum is shown in FIG. 4a. The X-ray diffraction (XRD) spectrum of the solid electrolytes of Comparative Example 1(Li₂ZrCl₆) and Example 2(Li_{2.1}ZrCl_{5.9}S_{0.1}) after being stored in air for 1 day is shown in FIG. 4b.

Referring to FIGS. 4a and 4b, it was confirmed that the solid electrolyte of Examples maintains their crystal structure stably even when exposed to air or oxygen, and exhibits stability equivalent to that of Comparative Example 1.

### (2) Measurement of ionic conductivity

The ionic conductivity of the solid electrolytes produced in the Examples and Comparative Example was measured at 30°C by the following method, and the measurement results are summarized in Table 2 below.

First, in a glove box with an argon atmosphere, an appropriate amount of the sample was weighed, placed in a polyetheretherketone tube (PEEK tube, inner diameter 10 mm, outer diameter 30 mm, height 20 mm), and interposed between the powder molding jigs containing SUS304 from the top and bottom.

Next, it was pressed at the indicated pressure of 2 tons using a single-screw press to form pellets with a diameter of 10 mm and an arbitrary thickness. Then, SUS foil was placed on both sides of the pellet, and further molded at the indicated pressure of 2 tons. The resulting pellet was placed in a closed electrochemical cell capable of maintaining an argon atmosphere.

For ionic conductivity measurement, a Potensiostat (VSP300) manufactured by Biologic was used as a frequency response analyzer (FRA), and a small environmental tester was used as a constant temperature device. Measurement was started in the high frequency range under the conditions of AC voltage of 10 mV to 100 mV, a frequency range of 1 Hz to 10 MHz, an integration time of 0.2 seconds, and a temperature of 30°C. EC-lab was used for measurement and analysis software.

**[Table 2]**

| **Example / Comparative Example** | Ionic conductivity **(mS/cm)** |
|---|---|
| Comparative Example 1 | 0.360 |
| Example 1 | 0.606 |
| Example 2 | 0.734 |
| Example 3 | 0.849 |
| Example 4 | 0.834 |
| Example 5 | 0.890 |
| Example 6 | 0.530 |
| Example 7 | 0.604 |
| Example 8 | 0.876 |
| Example 9 | 0.963 |
| Example 10 | 0.909 |
| Example 11 | 0.866 |
| Example 12 | 0.436 |
| Example 13 | 0.700 |
| Example 14 | 0.770 |
| Example 15 | 0.854 |
| Example 16 | 0.661 |
| Example 17 | 0.665 |
| Example 18 | 0.621 |
| Example 19 | 0.685 |

Referring to Table 2, it was confirmed that the solid electrolyte of Examples showed very excellent ionic conductivity as compared to Comparative Example 1.

### (3) Charge/discharge characteristics of secondary batteries

The charge/discharge characteristics of the secondary battery produced in the Preparation Example were evaluated by the following method.

Charging of the battery was terminated after charging at a constant current until the voltage reached 4.0 V relative to Li. Discharging of the battery was performed at a constant current up to 2.4V. Further, during such a test, charging/discharging was performed at 0.1C, and the characteristics of the secondary battery were evaluated while repeatedly performing the cycle.

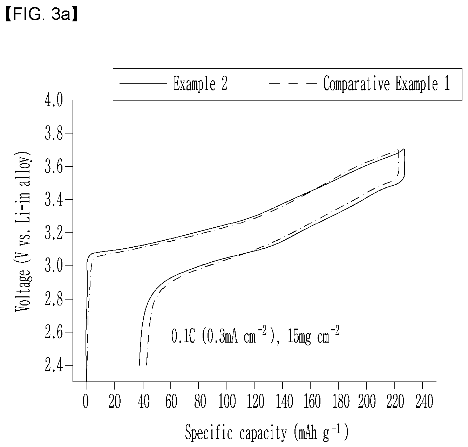

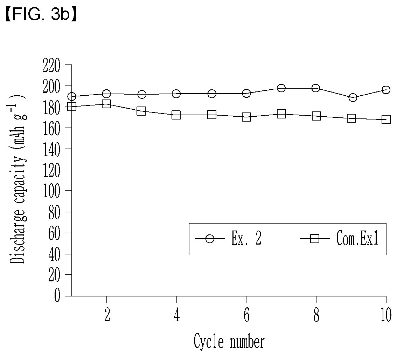

FIG. 3a is a voltage-capacity graph of the initial charge/discharge cycle of the secondary batteries produced using the solid electrolytes of Comparative Example 1 (Li₂ZrCl₆) and Example 2 (Li_{2.1}ZrCl_{5.9}S_{0.1}), respectively, and FIG. 3b is a graph showing the discharge capacity per cycle of the secondary batteries produced in Comparative Example 1 and Example 2.

Referring to FIG. 3a, it was confirmed that the secondary battery produced using the solid electrolytes of Examples showed similar characteristics to the secondary battery produced as Comparative Example in the initial cycle. Further, referring to FIG. 3b, it was confirmed that as the charge/discharge cycle was repeatedly performed, the secondary batteries produced in Examples showed superior discharge capacity as compared to that produced in the Comparative Example.

## Claims

1. A halide solid electrolyte represented by the following Formula 1:
[Formula 1] Li_{(6-4a+b)}MₐX_{6-b}S_{b}
wherein in Formula 1, M is a tetravalent transition metal element, X is a halogen element, 0 < a < 1.5, and 0 < b < 6.

2. The halide solid electrolyte according to claim 1, wherein the M includes one or more tetravalent transition metal elements selected from the group consisting of zirconium (Zr), hafnium (Hf), and titanium (Ti), and
zirconium (Zr) is contained in an amount of 60 mol% or more based on the total content of M.

3. The halide solid electrolyte according to claim 1, wherein the M is zirconium (Zr).

4. The halide solid electrolyte according to claim 1, wherein the X includes one or more halogen elements selected from the group consisting of fluorine (F), chlorine (Cl), bromine (Br) and iodine (I), and chlorine (Cl) is contained in an amount of 60 mol% or more based on the total content of X.

5. The halide solid electrolyte according to claim 4, wherein the X consists only of chlorine (Cl), or contains 60 to 99 mol% of chlorine (Cl) and 1 to 40 mol% of bromine (Br).

6. The halide solid electrolyte according to claim 1, which satisfies the range of 2 < 6-4a+b ≤ 3.3 in Formula 1.

7. The halide solid electrolyte according to claim 6, which satisfies the range of 2.10 ≤ 6-4a+b ≤ 2.40 in Formula 1.

8. The halide solid electrolyte according to claim 1, which satisfies the range of 0.8 ≤ a ≤ 1.0 in Formula 1.

9. The halide solid electrolyte according to claim 8, which satisfies the range of 0.95 ≤ a ≤ 1.0 in Formula 1.

10. The halide solid electrolyte according to claim 1, which satisfies the range of 0 < b ≤ 0.5 in Formula 1.

11. The halide solid electrolyte according to claim 10, which satisfies the range of 0.1 ≤ b ≤ 0.25 in Formula 1.

12. A method for producing the halide solid electrolyte of claim 1, comprising reacting a mixture of lithium halide, a group 4 transition metal M halide, and lithium sulfide under the application of mechanical force.

13. The method according to claim 12, wherein the reaction comprises reacting a mixture containing LiX, MX₄, and Li₂S in a molar ratio of (6-4a-b):a:b.

14. The method according to claim 12, wherein the reaction proceeds while mechanically milling the mixture.

15. A secondary battery comprising:
a cathode;
an anode; and
an electrolyte layer formed between the cathode and the anode,
wherein at least one of the cathode, the anode, or the electrolyte layer comprises the halide solid electrolyte of claim 1.
